# EUROPÄISCHE PATENTSCHRIFT

(11) **EP 2 468 481 B1**
(45) Veröffentlichungstag und Bekanntmachung des Hinweises auf die Patenterteilung: **14.01.2015**
(21) Anmeldenummer: 11189739.3
(22) Anmeldetag: 18.11.2011
(51) Int. Cl.: B29C 51/12, B29C 43/18, B29C 51/08, B29C 51/26, B29C 65/02, B29C 43/36, B29K 309/08, B29K 105/08, B62D 29/04, B60R 13/08, B29C 70/76

(54) **Bauelement aus Kunststoff für ein Kraftfahrzeug sowie Verfahren zur Herstellung eines solchen Bauelements**
Construction element made from plastic for a motor vehicle and method for producing such a construction element
Composant en matière synthétique pour un véhicule automobile et procédé de fabrication d'un tel composant

(30) Priorität: 27.12.2010 DE 102010056032
(43) Veröffentlichungstag der Anmeldung: 27.06.2012
(73) Patentinhaber: Dr. Ing. h.c. F. Porsche AG, 70435 Stuttgart (DE); HBW-Gubesch Thermoforming GmbH, 91489 Wilhelmsdorf (DE)
(72) Erfinder: Hölzel, Steffen, Dr., 71735 Eberdingen (DE); Pentia, Bogdan, 73760 Ostfildern (DE); Freitag, Tobias, 97258 Oberickelsheim (DE)
(74) Vertreter: Sturm, Christoph

(56) Entgegenhaltungen:
- WO-A1-2008/101360

## Beschreibung

Die Erfindung betrifft ein Bauelement aus Kunststoff für ein Kraftfahrzeug, das durch zwei gefügte, aus thermoplastischen Materialien bestehende Bauteile gebildet ist. Es betrifft ferner ein Verfahren zur Herstellung eines solchen Bauelements.

Zur Gewichtsreduktion bei Unterbodenverkleidungen ist es bekannt, einen Sandwich-Werkstoff einzusetzen. Bei diesem handelt es sich um einen LWRT-Kunststoff (Low Weight Reinforced Thermoplastics). Ausgangshalbzeug ist eine Platte, die nach dem Aufheizen über die Schmelztemperatur der thermoplastischen Matrix im Umformprozess - ähnlich dem Umformen von Metallblechen - in die gewünschte Bauteilgeometrie umgeformt wird. Anschließend wird die Außenkontur aus der umgeformten Platte beschnitten. Ähnlich bekannten Umformprozessen bei gewebeverstärkten Thermoplasten oder der Umformung von Metallblechen existieren enge geometrische Restriktionen. Wird der zulässige Umformgrad überschritten, entstehen Falten im Bauteil oder im Bauteil entstehen Risse.

Um komplexe Geometrien, zum Beispiel Luftkanäle oder - einlässe, in LWRT-Bauteilen realisieren zu können, werden bisher diese Lufteinlässe üblicherweise im Spritzgussverfahren hergestellt und anschließend in das fertige LWRT-Bauteil eingeschweißt oder eingenietet. Diese Trennstelle der Bauteile stellt eine mechanische Schwachstelle dar. Zudem sind drei Fertigungsprozesse (Umformen des LWRT-Bauteils, Spritzgießen des Einsatzes, Anschweißen des Einsatzes an das LWRT-Bauteil) notwendig.

Ein Bauelement aus Kunststoff für ein Kraftfahrzeug, das durch zwei gefügte, aus thermoplastischen Materialien bestehende Bauteile gebildet ist, ist beispielsweise aus der DE 39 13 723 Al bekannt.

In der DE 04 775 802 T1 ist eine verzahnte Verbindung zwischen zwei Faserverbundlaminaten beschrieben. Es findet ein Klebemittel innerhalb der Verbindungsebene Verwendung.

Aus der EP 1 362 744 B1 ist es bekannt, in eine Unterbodenverkleidung Lufteinlässe zu integrieren.

Ein Bauelement nach dem Oberbegriff des Anspruchs 1 ist aus der WO 2008/101360 A1 bekannt.

Aufgabe der vorliegenden Erfindung ist es, ein Bauelement aus Kunststoff für ein Kraftfahrzeug, das durch zwei gefügte, aus thermoplastischen Materialien bestehende Bauteile gebildet ist, so weiterzubilden, dass das Bauelement besonders gute Festigkeits- und Steifigkeitseigenschaften aufweist. Aufgabe der Erfindung ist es ferner, ein Verfahren zum kostengünstigen Herstellen eines solchen Bauteils anzugeben.

Die Erfindung schlägt ein Bauelement nach Patentanspruch 1 vor.

Diese Gestaltung des Bauelements ermöglicht es, komplexe Geometrien im Bauelement zu realisieren, indem das GMT-Bauteil die komplexe Geometrie aufweist und aufgrund der überlappenden Verbindung mit dem LWRT-Bauteil das Bauelement mit besonders guten Festigkeits- und Steifigkeitseigenschaften ausgestattet werden kann. vorzugsweise ist das LWRT-Bauteil nicht nur im Überlappungsbereich konsolidiert ausgebildet, sondern auch in dem an den Überlappungsbereich angrenzenden Bereich konsolidiert ausgebildet. Durch die Konsolidierung dieses plattenförmigen, sandwichartigen Grundbauteils, somit das Pressen des LWRT-Bauteils in diesem Bereich, wird erreicht, dass keine Luft im LWRT-Bauteil mehr vorhanden ist und es an den Rändern zum GMT-Bauteil soweit verdichtet ist, dass bei der Herstellung des Bauelements aus dem aufgeheizten LWRT-Bauteil und dem aufgeheizten GMT-Bauteil der GMT-Kunststoff (Glasmattenverstärktem Thermoplasten - GMT) nicht über eine definierte Trennlinie fließen kann und somit das LWRT-Bauteil nicht unter dem Fließdruck des GMT-Kunststoffs Falten wirft.

Das GMT-Bauteil weist im Überlappungsbereich Vorsprünge auf.

Das GMT-Bauteil wird überlappend bis zur definierten Trennlinie zwischen LWRT-Bauteil und GMT-Bauteil angepresst. Die Trennlinie sowie der Übergang vom konsolidierten Bereich des LWRT-Bauteils zum gelofteten Bereich des LWRT-Bauteils ist mit den Vorsprüngen, insbesondere solchen, die durch eine säge-zahnartige oder mäanderförmige Gestaltung des GMT-Bauteils im Überlappungsbereich gebildet sind, auszuführen, um eine optimale Biegesteifigkeit zu erhalten. In diesem Überlappungsbereich kann die Wanddicke des GMT-Bauteils erhöht werden, um die Festigkeit und Steifigkeit weiter zu erhöhen. Das Bauelement wird insbesondere im Zusammenhang mit einer Unterbodenverkleidung eingesetzt. Hierbei bildet das LWRT-Bauteil die Unterbodenverkleidung des Kraftfahrzeugs und das GMT-Bauteil insbesondere einen Luftkanal oder Lufteinlass. Durch ein oder mehrere Luftkanäle/Lufteinlässe wird beim Fahren entlang der Unterbodenverkleidung geführte Luft durch den Luftkanal zu zu kühlenden Komponenten des Fahrzeugs geführt, beispielsweise zu Bremsen des Fahrzeugs. Die Luftkanäle gestalten sich demzufolge beispielsweise als Bremsluftkanäle.

Bei dem erfindungsgemäßen Verfahren zur Herstellung des beschriebenen Bauelements wird ein bis auf dessen Verarbeitungstemperatur aufgeheizter Zuschnitt aus LWRT-Kunststoff in ein Formwerkzeug eingelegt, ein bis auf dessen Verarbeitungstemperatur aufgeheizter Zuschnitt aus GMT-Kunststoff in einen zurückgefahrenen Schieber des Formwerkzeugs eingelegt, das Formwerkzeug geschlossen und hierbei der aufgeheizte LWRT-Zuschnitt umgeformt sowie in einem Teilbereich konsolidiert, ferner bei geschlossenem Formwerkzeug der Schieber vorgefahren und hierbei der aufgeheizte GMT-Zuschnitt an den aufgeheizten LWRT-Zuschnitt in dessen konsolidiertem Bereich überlappend angeschweißt.

Wesentlich ist bei dem erfindungsgemäßen Verfahren somit, dass das Bauelement in einem einzigen Fertigungsprozessablauf hergestellt werden kann, somit direkt in einem One-Shot-Prozess. Bei diesem Fertigungsprozessablauf wird das LWRT-Bauteil zusammen mit der komplexen, aus einem LWRT-Kunststoff nicht herstellbaren Geometrie, beispielsweise einer Geometrie eines scharfkantigen Luftkanals, direkt in einem Prozess hergestellt, wobei diese komplexe Geometrie durch das GMT-Bauteil gebildet ist.

Zur Herstellung des Bauelements wird in aller Regel zunächst beim LWRT-Halbzeugzuschnitt ein Bereich des später anzubringenden GMT-Bauteils mit ausgeschnitten. Das so vorbereitete LWRT-Halbzeug wird, wie im LWRT-Umformprozess üblich - in einem Spannrahmen über die Schmelztemperatur der thermoplastischen Matrix erhitzt. Das Umformwerkzeug besitzt im Bereich des GMT-Bauteils, somit beispielsweise im Bereich des zu schaffenden Luftkanals, einen Schieber, der im geschlossenen Zustand den Luftkanal abbildet. In den zurückgefahrenen Schieber wird ein aufgeheizter GMT-Zuschnitt eingelegt. Das aufgeheizte LWRT-Halbzeug wird nun im Umformwerkzeug umgeformt. Nach Schließen des Werkzeugs werden im gleichen Prozessschritt die komplexen Geometrien, somit beispielsweise der Luftkanal, aus dem GMT-Kunststoff direkt angeformt und mit der LWRT-Grundplatte verschweißt. Während des Anpressens des GMT-Bauteils an das LWRT-Bauteil sind beide Matrix-Werkstoffe noch schmelzeförmig, sodass es zu einem Verschweißen der beiden Halbzeuge kommt.

Gegenüber dem herkömmlichen Anschweißen spritzgegossener Bauteile weist das erfindungsgemäße Verfahren deutlich geringere Investitionen auf, da keine Schweißanlage und kein zusätzliches Spritzgusswerkzeug erforderlich ist. Ferner weist das erfindungsgemäße Verfahren geringere Stückkosten aufgrund des Entfalls des Schweißprozesses auf.

Ein bevorzugtes Ausführungsbeispiel des erfindungsgemäßen Bauelements ist in der Zeichnung näher dargestellt und es wird im Folgenden die Gestaltung und die Herstellung dieses Bauelements näher erläutert.

Es zeigt:
- Fig. 1: eine räumliche Ansicht der Oberseite des erfindungsgemäßen Bauelements, das als Unterbodenverkleidung mit zwei Luftkanälen für Bremsluft ausgebildet ist,
- Fig. 2: einen Schnitt durch das Bauelement im Verbindungsbereich eines der Luftkanäle mit der Unterbodenverkleidung, gemäß der Linie II-II in Fig. 1,
- Fig. 3: die umgeformte Unterbodenverkleidung ohne angeformtem Luftkanal, veranschaulicht für den Bereich, der für das Anformen des Luftkanals vorgesehen ist,
- Fig. 4: eine Darstellung gemäß Fig. 3 bei an die Unterbodenverkleidung angeformten Luftkanal,
- Fig. 5: den grundsätzlichen Fertigungsprozess des in der Fig. 1 veranschaulichten Bauelements.

### Figurenbeschreibung

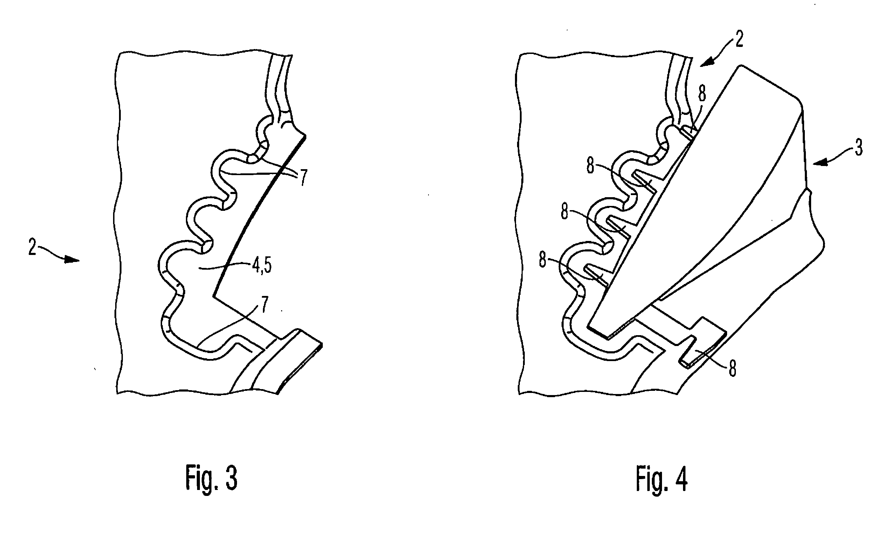

Das Bauelement 1 besteht aus Kunststoff und findet Verwendung im Unterbodenbereich eines Kraftfahrzeugs. Das Bauelement wird durch ein Bauteil 2 aus LWRT-Kunststoff und zwei spiegelsymmetrisch identische Bauteile 3 aus GMT-Kunststoff gebildet. Das Bauteil 2 ist ein plattenförmiges, sandwichartiges Grundbauteil, das aus dem LWRT-Kunststoff besteht. Das Halbzeug, aus dem das Bauteil hergestellt wird, ist am Rand beschnitten und insbesondere in den Bereichen, an denen die Bauteile 3 angebracht werden, konsolidiert. Im Überlappungsbereich 4 zwischen Bauteil 2 und jeweiligem Bauteil 3 sowie dem an diesen Bereich 4 angrenzenden Bereich 5 ist das Bauteil 2 konsolidiert. Dies ergibt sich anschaulich durch die deutlich geringere Wandstärke des Bauteils 2 in den Bereichen 4 und 5 gegenüber dem sich hieran anschließenden Bereich 6 des Bauteils 2, in dem das Bauteil 2 eine deutlich größere Wandstärke, die Ausgangswandstärke des Bauteils 2, aufweist. Insbesondere der Darstellung der Fig. 3 ist zu entnehmen, dass die konsolidierten Randbereiche des Bauteils 2, die den Bereichen 4 und 5 entsprechen, eine mäanderförmig verlaufende Randkontur, somit Stufe 7 aufweisen. Das Bauteil 3 weist im Überlappungsbereich sägezahnartige Vorsprünge 8 auf, die bei mit dem Bauteil 2 verbundenem Bauteil 3 so positioniert sind, dass sie in Rücksprünge der mäanderförmigen Bereiche des Bauteils 2 ragen, allerdings die Kontur des Bauteils 3 in Abstand zur entlang der Mäanderform verlaufenden Stufe 7 endet. In dem zwischen dem Bauteil 3 und der Stufe 7 gebildeten Abschnitt ist der LWRT-Kunststoff 2 somit konsolidiert.

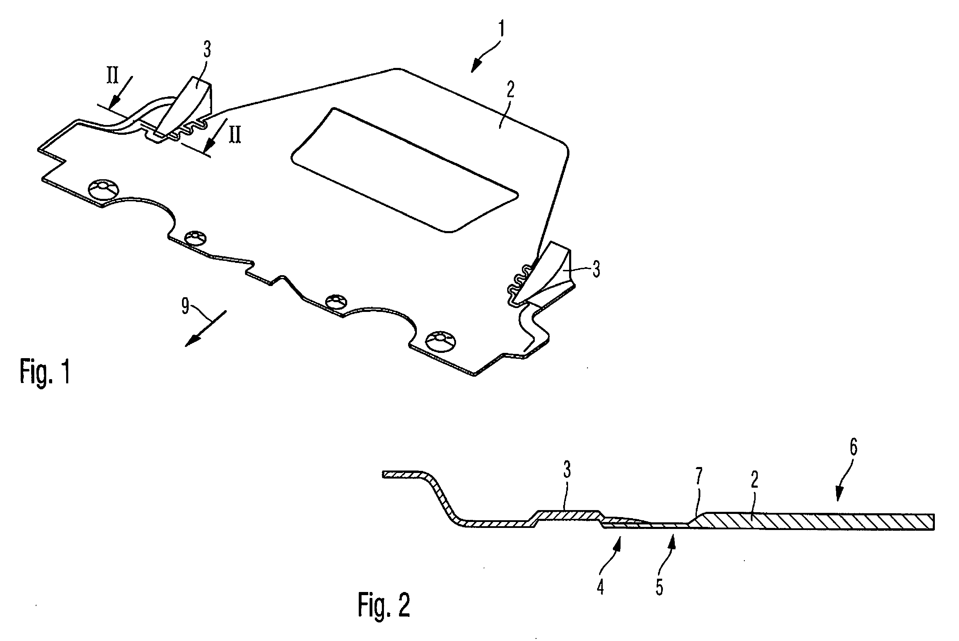

In Fig. 1 veranschaulicht der Pfeil 9 die Vorwärtsfahrtrichtung des Kraftfahrzeugs, bezogen auf die Anordnung der gezeigten Unterbodenverkleidung.

Fährt das Fahrzeug, wird Luft durch die beiden durch die Bauteile 3 gebildeten Luftkanäle nach oben zu den Bremsen im Bereich der beiden Räder einer Fahrzeugachse umgelenkt und dient der Kühlung der Bremsen.

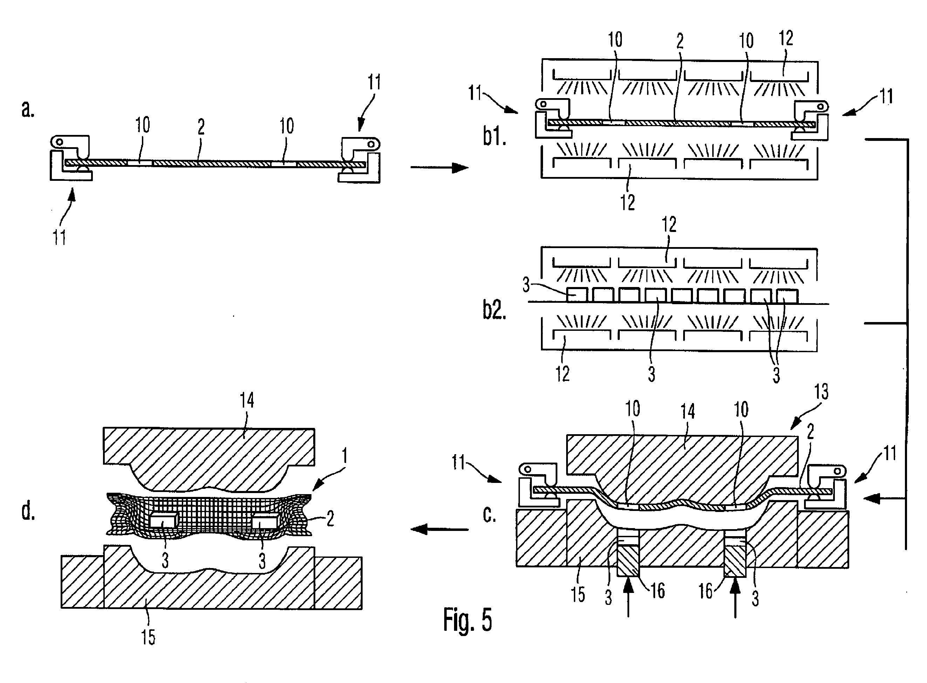

In der Fig. 5 ist der grundsätzliche Fertigungsprozess des in den Fig. 1 bis 4 veranschaulichten Bauelements 1 beschrieben.

Zur Vorbereitung wird das LWRT-Halbzeug unter Berücksichtigung der späteren Geometrie des LWRT-Bauteils 2 am Rand beschnitten und zudem im Bereich des jeweils anzubringenden späteren Lufteinlasses eine Öffnung mit ausgeschnitten. Die beiden Öffnungen für die GMT-Bauteile 3 sind mit der Bezugsziffer 10 bezeichnet. Der so vorbereitete LWRT-Zuschnitt 2, der das plattenförmige, sandwichartige Grundbauteil des Bauelements 1 darstellt, wird in ein Führungssystem 11 eingelegt, das einen Spannrahmen umfasst. Dies ist in Fig. 5 zum Verfahrensschritt a. veranschaulicht. Der LWRT-Zuschnitt 2 ist während des gesamten Fertigungsprozesses im Spannrahmen gehalten und zwischen den einzelnen Fertigungsstationen verfahrbar.

Beim Verfahrensschritt b1. ist der LWRT-Zuschnitt 2 mittels des Führungssystems 11 zu einer Aufheizstation 12 verfahren, in der der LWRT-Zuschnitt 2 beispielsweise mittels IR-Strahlern der Aufheizstation 12 aufgeheizt wird. Die Erhitzung des LWRT-Zuschnitts 2 erfolgt bis über die Schmelztemperatur der thermoplastischen Matrix dieses Kunststoffs. Gleichzeitig wird gemäß dem Verfahrensschritt b2. in einer weiteren Aufheizstation 12 der GMT-Zuschnitt 3 aufgeheizt. Das Aufheizen der Zuschnitte 2 und/oder 3 kann auch mittels Umluft erfolgen.

Zum Verfahrensschritt c. ist ein Umformwerkzeug 13 veranschaulicht, das oben einen Stempel 14 und unten eine Matrize 15 aufweist. Entsprechend den beiden beim Bauelement 1 zu bildenden GMT-Bauteilen 3 weist die Matrize 15 im Bereich der anzubringenden Luftkanäle Schieber 16 auf. Im geschlossenen Zustand bilden diese Schieber 16 die Luftkanäle ab. In der zum Verfahrensschritt c. veranschaulichten Stellung des Umformwerkzeugs 13 sind die beiden Schieber 16 zurückgefahren und es werden in dieser Stellung der Schieber 16 aufgeheizte GMT-Zuschnitte 3 in diese eingelegt. Bei diesen GMT-Zuschnitten handelt es sich um Glasmatten-Thermoplaste, eine Fließpressmasse aus Glasfasern und thermoplastischer Matrix, die die gleiche Werkstoffkombination wie ein LWRT-Kunststoff bildet, jedoch fließfähig ist.

In das geöffnete Umformwerkzeug 13, wie es zum Verfahrensschritt c. veranschaulicht ist, wird der aufgeheizte LWRT-Zuschnitt 2 eingefahren und beim Schließen des Umformwerkzeugs 13 umgeformt. Nach Schließen des Umformwerkzeugs 13 werden im gleichen Prozessschritt die komplexen Geometrien der Luftkanäle aus den GMT-Zuschnitten 3 direkt angeformt und mit dem LWRT-Zuschnitt 2 verschweißt. Hierbei entsteht die endgültige Form des Bauelements 1, das durch das LWRT-Bauteil 2, somit die Unterbodenverkleidung, und das GMT-Bauteil 3, somit die Luftkanäle, gebildet ist. Wichtig ist, dass während des Anpressens des jeweiligen GMT-Zuschnitts 3 an den LWRT-Zuschnitt 2 beide Matrixwerkstoffe noch schmelzeförmig sind, sodass es zu einem Verschweißen der beiden Halbzeuge kommt.

Verfahrensschritt d. zeigt das geöffnete Umformwerkzeug 13 und das durch das erfindungsgemäße Verfahren hergestellte Bauelement 1. Bei geöffnetem Umformwerkzeug 13 wird das Bauelement 1 aus dem Umformwerkzeug 13 entnommen.

Wesentlich ist bei der Herstellung des Bauelements 1, dass der LWRT-Zuschnitt 2, wie es zu den Fig. 3 und 4 veranschaulicht ist, im Bereich der Anbindung zum GMT-Zuschnitt 3 vollständig konsolidiert wird, das heißt soweit verpresst wird, dass keine Luft in dem Bereich des LWRT-Bauteils 2 mehr vorhanden ist und es an den Rändern zur Geometrie des GMT-Zuschnitts 3 so weit verdichtet wird, dass der GMT-Kunststoff nicht über die definierte Trennlinie zwischen den beiden Zuschnitten 2 und 3 fließen kann und der LWRT-Zuschnitt 2 nicht unter dem Fließdruck des GMT-Kunststoffs Falten wirft. Um dies sicherzustellen ist in das Umformwerkzeug 13, entlang des Überlappungsbereichs 4 von GMT-Zuschnitt 3 und LWRT-Zuschnitt 2, außerhalb der äußeren Kontur des GMT-Zuschnitts, eine Fließsperre integriert, die als Kante im Formwerkzeug ausgebildet ist.

Der LWRT-Zuschnitt 2 weist eine einfache Schnittkontur, beispielsweise eine Linie oder eine einfach gekrümmte Kurve auf. Der GMT-Zuschnitt 3 wird überlappend bis zur definierten Trennlinie angepresst. Die Trennlinie sowie der Übergang vom konsolidierten Bereich des LWRT-Zuschnitts 2 zum gelofteten Bereich des LWRT-Zuschnitts 2 ist in Mäanderform oder sägezahnartig auszuführen, um eine optimale Biegesteifigkeit zu erhalten. In diesem Überlappungsbereich kann die Wanddicke des GMT-Zuschnitts 3 erhöht werden, um die Festigkeit und Steifigkeit weiter zu erhöhen.

### Bezugszeichenliste

- 1: Bauelement
- 2: LWRT-Bauteil/LWRT-Zuschnitt
- 3: GMT-Bauteil/GMT-Zuschnitt
- 4: Bereich
- 5: Bereich
- 6: Bereich
- 7: Stufe
- 8: Vorsprung
- 9: Pfeil
- 10: Öffnung
- 11: Führungssystem
- 12: Aufheizstation
- 13: Umformwerkzeug
- 14: Stempel
- 15: Matrize
- 16: Schieber

## Patentansprüche

1. Bauelement aus Kunststoff für ein Kraftfahrzeug, das durch zwei gefügte, aus thermoplastischen Materialien bestehende Bauteile (2, 3) gebildet ist, wobei das eine Bauteil (2) ein plattenförmiges Bauteil ist, das aus einem LWRT-Kunststoff besteht, und wobei das andere Bauteil (3) aus einem GMT-Kunststoff besteht, wobei die Bauteile (2, 3) überlappend angeordnet sind, **dadurch gekennzeichnet, dass** das LWRT-Bauteil (2) im Überlappungsbereich (4) konsolidiert ausgebildet ist, und dass das GMT-Bauteil (3) im Überlappungsbereich (4) Vorsprünge (8) aufweist.

2. Bauelement nach Anspruch 1, **dadurch gekennzeichnet, dass** das LWRT-Bauteil (2) in einem an den Überlappungsbereich (4) angrenzenden Bereich (5) konsolidiert ausgebildet ist.

3. Bauelement nach Anspruch 1 oder 2, **dadurch gekennzeichnet, dass** das die Vorsprünge (8) durch eine sägezahnartige oder mäanderförmige Gestaltung des GMT-Bauteils (3) im Überlappungsbereich (4) gebildet sind.

4. Bauelement nach einem der Ansprüche 1 bis 3, **dadurch gekennzeichnet, dass** das LWRT-Bauteil (2) eine Unterbodenverkleidung eines Kraftfahrzeugs bildet und das GMT-Bauteil (3) einen Luftkanal bildet.

5. Verfahren zur Herstellung eines Bauelements nach einem der Ansprüche 1 bis 4, **dadurch gekennzeichnet, dass** ein bis auf dessen Verarbeitungstemperatur aufgeheizter Zuschnitt (2) aus LWRT-Kunststoff in ein Umformwerkzeug (13) eingelegt wird, ein bis auf dessen Verarbeitungstemperatur aufgeheizter Zuschnitt (3) aus GMT-Kunststoff in einen zurückgefahrenen Schieber (16) des Umformwerkzeugs (13) eingelegt wird, das Umformwerkzeug (13) geschlossen und hierbei der aufgeheizte LWRT-Zuschnitt (2) umgeformt sowie in einem Teilbereich (4) konsolidiert wird, sowie bei geschlossenem Umformwerkzeug (13) der Schieber (16) vorgefahren wird und hierbei der aufgeheizte GMT-Zuschnitt (3) an den aufgeheizten LWRT-Zuschnitt (2) in dessen konsolidierten Bereich (4) überlappend angeschweisst wird.

6. Verfahren nach Anspruch 5, **dadurch gekennzeichnet, dass** der LWRT-Zuschnitt (2) an einer Beschnittkante konsolidiert ausgebildet ist.

7. Verfahren nach Anspruch 5 oder 6, **dadurch gekennzeichnet, dass** der LWRT-Zuschnitt (2) und der GMT-Zuschnitt (3) bis auf die Schmelztemperatur des Matrixpolymers des jeweiligen Werkstoffs erwärmt wird.

8. Verfahren nach einem der Ansprüche 5 bis 7, **dadurch gekennzeichnet, dass** der LWRT-Zuschnitt (2) beim Aufheizen und/oder Umformen in Randbereichen gehalten ist, insbesondere in einem Spannrahmen gehalten ist.

9. Verfahren nach einem der Ansprüche 5 bis 8, **dadurch gekennzeichnet, dass** im Umformwerkzeug (13), entlang des Überlappungsbereichs (4) von GMT-Zuschnitt (3) und LWRT-Zuschnitt (2), ausserhalb der äusseren Kontur des GMT-Zuschnitts (3), eine Fliesssperre integriert ist, die als Kante im Formwerkzeug ausgebildet ist.

## Claims

1. Construction element made from plastic for a motor vehicle and formed by two joined components (2, 3) consisting of thermoplastic materials, the one component (2) being a sheet-like component, which consists of an LWRT plastic, and the other component (3) consisting of a GMT plastic, the components (2, 3) being arranged in an overlapping manner, **characterized in that** the LWRT component (2) is formed in a consolidated state in the overlapping region (4), and **in that** the GMT component (3) has projections (8) in the overlapping region (4).

2. Construction element according to Claim 1, **characterized in that** the LWRT component (2) is formed in a consolidated state in a region (5) adjoining the overlapping region (4).

3. Construction element according to Claim 1 or 2, **characterized in that** the projections (8) are formed by a sawtooth-like or meander-shaped design of the GMT component (3) in the overlapping region (4).

4. Construction element according to one of Claims 1 to 3, **characterized in that** the LWRT component (2) forms an underbody lining of a motor vehicle and the GMT component (3) forms an air duct.

5. Method for producing a construction element according to one of Claims 1 to 4, **characterized in that** a blank (2) made from LWRT plastic and heated up to its processing temperature is placed in a forming tool (13), a blank (3) made from GMT plastic and heated up to its processing temperature is placed in a withdrawn slide (16) of the forming tool (13), the forming tool (13) is closed and the heated-up LWRT blank (2) is thereby subjected to a forming operation and consolidated in a partial region (4), and, with the forming tool (13) closed, the slide (16) is advanced and the heated-up GMT blank (3) is thereby fused onto the heated-up LWRT blank (2) in its consolidated region (4) in an overlapping manner.

6. Method according to Claim 5, **characterized in that** the LWRT blank (2) is formed in a consolidated state at a trimming edge.

7. Method according to Claim 5 or 6, **characterized in that** the LWRT blank (2) and the GMT blank (3) are heated up to the melting temperature of the matrix polymer of the respective material.

8. Method according to one of Claims 5 to 7, **characterized in that** the LWRT blank (2) is held in peripheral regions, in particular in a clamping frame, during the heating up and/or forming operation.

9. Method according to one of Claims 5 to 8, **characterized in that** a flow barrier, which is formed as an edge in the forming tool, is integrated in the forming tool (13), along the overlapping region (4) of the GMT blank (3) and the LWRT blank (2), outside the outer contour of the GMT blank (3).

## Revendications

1. Élément structurel en matière plastique pour un véhicule automobile, formé de deux composants (2, 3) assemblés, en matériaux thermoplastiques, l'un des composants (2) étant un composant en forme de plaque qui se compose de plastique LWRT, l'autre composant (3) se composant de plastique GMT, les composants (2, 3) étant disposés de manière à se chevaucher, **caractérisé en ce que** le composant LWRT (2) est réalisé de manière consolidée dans la région de chevauchement (4) et **en ce que** le composant GMT (3) présente des saillies (8) dans la région de chevauchement (4).

2. Élément structurel selon la revendication 1, **caractérisé en ce que** le composant LWRT (2) est réalisé de manière consolidée dans une région (5) adjacente à la région de chevauchement (4).

3. Élément structurel selon la revendication 1 ou 2, **caractérisé en ce que** les saillies (8) sont formées par une configuration en forme de dents de scie ou en forme de méandres du composant GMT (3) dans la région de chevauchement (4).

4. Élément structurel selon l'une quelconque des revendications 1 à 3, **caractérisé en ce que** le composant LWRT (2) forme un habillage de dessous de caisse d'un véhicule automobile et le composant GMT (3) forme un canal d'air.

5. Procédé de fabrication d'un élément structurel selon l'une quelconque des revendications 1 à 4, **caractérisé en ce qu'**une découpe (2) en plastique LWRT chauffée à sa température de traitement est introduite dans un outil de formage (13), une découpe (3) en plastique GMT chauffée à sa température de traitement est introduite dans un coulisseau (16), ramené en arrière, de l'outil de formage (13), l'outil de formage (13) est fermé et la découpe en LWRT (2) chauffée est formée et est consolidée dans une région partielle (4), et lorsque l'outil de formage (13) est fermé, le coulisseau (16) est avancé et la découpe en GMT (3) chauffée est soudée par chevauchement à la découpe en LWRT (2) chauffée dans sa région consolidée (4).

6. Procédé selon la revendication 5, **caractérisé en ce que** la découpe en LWRT (2) est réalisée de manière consolidée au niveau d'une arête de coupe.

7. Procédé selon la revendication 5 ou 6, **caractérisé en ce que** la découpe en LWRT (2) et la découpe en GMT (3) sont chauffées jusqu'à la température de fusion du polymère de matrice du matériau respectif.

8. Procédé selon l'une quelconque des revendications 5 à 7, **caractérisé en ce que** la découpe en LWRT (2) est maintenue lors du chauffage et/ou du formage dans des régions de bord, notamment dans un cadre de serrage.

9. Procédé selon l'une quelconque des revendications 5 à 8, **caractérisé en ce que** dans l'outil de formage (13), le long de la région de chevauchement (4) de la découpe en GMT (3) et de la découpe en LWRT (2), à l'extérieur du contour extérieur de la découpe en GMT (3), est intégrée une barrière à l'écoulement qui est réalisée en tant qu'arête dans l'outil de formage.
